# EUROPEAN PATENT APPLICATION

(11) **EP 4 542 029 A1**
(43) Date of publication of application: **23.04.2025**
(21) Application number: 23203805.9
(22) Date of filing: 16.10.2023
(51) Int. Cl.: F03D 17/00

(54) **COMPUTER IMPLEMENTED METHOD AND COMPUTING SYSTEM FOR MONITORING THE BLADES OF A WIND TURBINE**

(71) Applicant: Wereover GmbH, 28359 Bremen (DE)
(72) Inventor: Kazim Çaglar Erat, 28359 Bremen (DE); Zeynep, Balca Yilmaz, 28359 Bremen (DE)
(74) Representative: Kaya, Erdem

(57) **Abstract**

The present invention relates to a computer implemented method for monitoring the blade (210) of a wind turbine (200), the method comprising fixing a sound acquisition device (110) to an outer surface of a tower (220) of the wind turbine (200), wherein the sound acquisition device (110) comprises a microphone, a sound encoder and a communication unit, acquiring a sound sample of sound emitted by the blade (210) during operation of the wind turbine (200), encoding the sound sample into a raw audio file, sending the raw audio file to a remote computing device (120), preprocessing the raw audio file, generating a spectrogram of the pre-processed audio file, detecting an anomaly by applying an image analysis machine learning model to the spectrogram, classifying the anomaly to a damage type by applying a damage type feature analysis machine learning model to frequency domain features of the audio file at the time and frequency of the anomaly, determining a damage location by applying a damage location feature analysis machine learning model to frequency domain features of the audio file at the time and frequency of the, and tracking of a damage severity by extracting audio features of the audio file at the time and frequency of the anomaly indicative of the damage severity depending on the damage type.

## Description

### Technical Field

The invention relates to a computer implemented method for monitoring the blades of a wind turbine and to a computing system implementing the method.

### Background Art

Operation and maintenance of wind turbines is a critical challenge in the renewable energy sector. There is a need for efficient and proactive monitoring of wind turbine blades to ensure their structural integrity and optimal performance. Wind turbine blades are subjected to various environmental stresses, including wind forces and weather conditions as well as lightning strikes, which can lead to wear and damage over time.

Detecting and addressing these issues early is essential to prevent costly downtime, reduce maintenance expenses, and ensure the safety and longevity of wind turbines.

The patent US 6 785 637 B1 describes a method for monitoring wind power plants by comparison of sounds recorded during operation of the power plants to reference sounds. The comparison is made preferably by human operators.

The patent application WO 2021/137760 A1 discloses a method and apparatus for inspecting wind turbine blades. The method comprises acquisition of a sound signal generated by the blades, generation of a frequency spectrogram of the sound signal and performing image recognition on the frequency spectrogram based on a damage recognition model.

The patent application EP 4 212 722 A1 describes an abnormality determination method for a wind power generation device. The method comprises measuring sound emitted by the device, detecting a signal component in the sound using spectrogram analysis and comparing the signal component to a predefined threshold value.

The patent application US 2022/0774896 A1 discloses a method of detecting anomalies in an acoustic signal emitted by a wind turbine for detecting defects of the wind turbine, in particular of the wind turbine's blades. Therefore, a machine learning algorithm is trained with acoustic signatures indicative of defects of the wind turbine.

### Technical Problem

The problem underlying the present invention is providing a method and a device for cost-effective and reliable monitoring of the blades of a wind turbine to ensure safe and efficient long-term operation of the wind turbine.

### Solution

The problem is solved by a computer implemented method according to claim 1 and by a computing system according to claim 15.

Advantageous embodiments are subject of the dependent claims.

The computer implemented method according to the invention for monitoring the blades of a wind turbine comprises fixing a sound acquisition device to an outer surface of a tower of the wind turbine, wherein the sound acquisition device comprises a microphone, a sound encoder, and a communication unit.

Fixing the sound acquisition device to the outer surface of the tower has the advantage that an existing wind turbine can be retrofitted with the sound acquisition device easily. For easy mounting, the sound acquisition device is fixed preferably close to the bottom of the tower. The sound acquisition device is fixed preferably above man height to avoid unauthorized access to the sound acquisition device, theft of the sound acquisition device, or vandalism.

The method comprises acquiring a sound sample of sound emitted by the blades during operation of the wind turbine using the microphone of the sound acquisition device. The microphone comprises for example a pre-polarized condenser microphone. The sensitivity, signal to noise ratio and/or dynamic range of the microphone are preferably constant over the audible frequency range from 20 Hz to 20 kHz. Preferably, the microphone has an omni-directional pick-up pattern, so that it is not necessary to direct the microphone precisely to the blades. The microphone may have, for example, an output impedance of 2.2 kΩ, a sensitivity of -40±2 dB re 1 V/Pa @ 1kHZ, a signal to noise ratio of more than 67 dB (@ 1 kHZ, rel 1 Pa per IEC651), a dynamic range of 83 dB (per IEC651), a maximum sound pressure level (SPL) of 110 dB (@ 1 kHZ, 1 % THD into 1 kΩ), and/or a total harmonic distortion (THD) of lower or equal to 0.5 %.

Preferably, the sound sample has a duration of 5 s to 60 s, more preferably of 10 s to 30 s, most preferably of 20 s. This duration has proven sufficient for reliable monitoring while minimising resources required for data storage, data transmission and data analysis.

The method comprises encoding the sound sample into a raw audio file using the sound encoder of the acquisition device. The sound sample is encoded preferably using a resolution from 8 bit to 32 bit, more preferably a resolution of 16 bit. This resolution has proven sufficient for reliable monitoring while minimising resources required for data storage, data transmission and data analysis.

The method comprises sending, preferably wireless sending, the raw audio file to a remote computing device using the communication unit of the sound acquisition device. The communication unit preferably comprises a 4G/LTE module, preferably with fallback feature to 3G and/or 2G. By sending the raw audio file to a remote computing device for further treatment, the sound acquisition device can be designed simple and cheap. This is particularly advantageous if many wind turbines is monitored, each wind turbine being equipped with a sound acquisition device.

Preferably, the sound acquisition device makes reasonable decisions when there is no network coverage, not to lose any raw audio files. The unsent raw audio files are preferably stored in the sound acquisition device and sent when the network is available again.

The remote computing device preferably is a cloud computing device to facilitate treatment of data from wind turbines installed at different sites.

The method comprises pre-processing the raw audio file by the remote computing device, wherein the pre-processing includes a compression of the audio file to reduce the amplitude of loud noise, and/or a normalization of the audio file to increase the loudness of the sound emitted by the blades, and/or a removal of stationary noise. These pre-processing steps increase the reliability of the results of the following analysis.

The method preferably comprises checking the validity of the raw or pre-processed audio file and dismissing audio files that do not pass the validity check before performing further analysis.

The method comprises generating a spectrogram of the pre-processed audio file by the remote computing device, wherein spectrogram parameters are preferably optimised for a maximum time-frequency resolution of the spectrogram.

The method comprises detecting an anomaly by applying an image analysis machine learning model to the spectrogram by the remote computing device. Applying an image analysis machine learning model to the spectrogram has proven more reliable for detecting the anomaly than working on the original audio file or applying different detection algorithms.

The method comprises classifying the anomaly to a damage type by applying a damage type feature analysis machine learning model to frequency domain features of the audio file at the time and frequency of the anomaly by the remote computing device. The damage type is, for example, leading edge erosion, foreign body impact, surface delamination, surface corrosion, and/or icing of the blades. By using the damage type feature analysis machine learning model, the anomaly can be classified to a damage type in a reliable way.

The method comprises determining a damage location by applying a damage location feature analysis machine learning model to frequency domain features of the audio file at the time and frequency of the anomaly by the remote computing device. By using the damage location feature analysis machine learning model, the damage location can be determined in a reliable way.

The method comprises tracking of a damage severity by extracting audio features of the audio file at the time and frequency of the anomaly indicative of the damage severity depending on the damage type by the remote computing device. The damage severity preferably is assessed by different methods, in particular by different machine learning models, depending on the damage type. By tracking the damage severity, it can be assessed if and when further monitoring and/or maintenance tasks must be performed to ensure safe and efficient functioning of the wind turbine, in particular in a predictive maintenance scheme. This way, unnecessary or too late performance of further monitoring and/or maintenance tasks is avoided reducing costs and improving reliability of the wind turbine.

### Description of Embodiments

The image analysis machine learning model preferably comprises supervised convolutional neural networks and/or unsupervised autoencoders. These methods have proven particularly suitable for anomaly detection.

The method preferably comprises training the image analysis machine learning model on general datasets and/or on datasets specific for the wind turbine. Training on general datasets makes the method more efficient because training must be performed only once for many wind turbines. Training on datasets specific for the wind turbine leads to more reliable results due to production differences and/or environmental differences between different wind turbines.

The method preferably comprises combining predictions from two, three, or more image analysis machine learning models. This model fusion leads to more reliable results.

The method preferably comprises retraining the image analyses machine learning model periodically to avoid model drift.

The method preferably comprises training the damage type feature analysis machine learning model on audio files obtained from sound samples of blades having known damage types, wherein classifying the anomaly is done to one of the known damage types. This leads to a more reliable classification.

The method preferably comprises training the damage location feature analysis machine learning model on audio files obtained from sound samples of blades having known damage locations. This leads to a more reliable determination.

The step of determining the damage location preferably comprises utilising geometric information of the blades to estimate the damage location. Incorporating geometric information leads to a more precise determination.

The step of tracking of the damage severity preferably comprises collecting baseline damage severity data during a healthy state of the blades, logging historical damage severity data over time, monitoring changes in damage severity over time and/or trend analysis of damage severity data. These steps can be used to predict when further monitoring and/or maintenance tasks will become necessary to allow for efficient predictive maintenance of the wind turbine.

The step of tracking of the damage severity preferably comprises estimating damage severity using an estimation machine learning model and/or statistical methods.

The method preferably comprises the steps of defining an alert threshold for the damage severity and sending an alert when the damage severity exceeds the alert threshold by the remote computing device. The alert can trigger immediate actions, for example shutting down the wind turbine and/or sending a maintenance team to the wind turbine, if necessary according to the damage severity and damage type. The alert can be sent, for example, to a control centre of the wind turbine.

The step of acquiring the sound sample preferably takes place over a spectral range from 20 Hz to 20 kHz. Using the complete audible spectrum leads to reliable monitoring results.

The sound acquisition device preferably comprises a power source. The power source allows for a simple installation of the sound acquisition device since no connection to an external power source is necessary. Preferably, the power source is a rechargeable power source, for example a rechargeable battery, in particular a lithium-ion battery. The lithium-ion battery is particularly suitable for long-term use due to its high cycle number. For example, the lithium-ion battery has a voltage of 5 V and/or a capacity of 12 Ah.

The step of acquiring the sound sample preferably is repeated with a repetition rate depending on a charging state of the power source. For example, a sound sample is acquired every two hours under normal conditions. If the charging state is low, the repetition rate may be decreased to allow for monitoring of the wind turbine blades for a longer duration without depleting the power source.

The step of fixing the sound acquisition device to the outer surface of the tower of the wind turbine preferably takes place at a side of the tower facing the nominal wind direction. By fixing the sound acquisition device at the side facing the nominal wind direction, the tower does not shield the sound acquisition device from the sound emitted by the blades when the blades are oriented towards the nominal wind direction.

The sound acquisition device preferably comprises a photovoltaic module. The photovoltaic module can supply the sound acquisition device with electric energy permanently and independently from an external power supply.

The step of fixing the sound acquisition device to the outer surface of the tower of the wind turbine preferably takes place at a side of the tower having a maximum solar exposition. This way, the photovoltaic module can harvest more energy.

The sound acquisition device preferably comprises a number of permanent magnets, wherein fixing the sound acquisition device to the outer surface of the tower of the wind turbine comprises magnetic fixing using the number of permanent magnets. Since the tower is usually made of steel, the sound acquisition device can be fixed using the magnets easily and quickly. In addition, the sound acquisition device can be removed or replaced easily and quickly without damaging the tower.

The sound acquisition device preferably comprises a, preferably parabolic, dish, wherein the microphone of the sound acquisition device is positioned within the dish, preferably at a focal point of the parabolic dish, wherein the step of fixing the sound acquisition device to the outer surface of the tower of the wind turbine comprises orienting an aperture of the dish to the blades. The dish shields the microphone against environmental noise leading to a more reliable monitoring. Preferably, the aperture of the dish is covered by a grid to protect the microphone.

The sound acquisition device preferably comprises a housing to protect the other components of the acquisition module against environmental influences like water and/or dust.

The sound acquisition device has, for example, a total weight of 1.3 kg, a size of 300 mm × 160 mm × 100 mm with an external solar module of 540 mm × 280 mm × 10 mm, and/or an operational temperature range from -25 °C to +80 °C.

The computing system according to the invention implements a method according to the invention for monitoring the blades of a wind turbine. The computing system comprises a sound acquisition device fixed to an outer surface of a tower of the wind turbine and a remote computing device.

The sound acquisition device comprises a microphone for acquisition of a sound sample of sound emitted by the blades during operation of the wind turbine, a sound encoder for encoding the sound sample into a raw audio file, and a communication unit for sending the raw audio file to the remote computing device.

In embodiments of the computing system, the sound acquisition device and/or the remote computing device can be designed as outlined in the description of the method according to the invention.

### Brief Description of the Drawings

The following description and drawings of various embodiments of the present invention are presented for purposes of illustration but are not intended to be exhaustive or limited to the embodiments disclosed.
Figure 1 shows schematically a computing system according to the invention.
Figure 2 shows schematically the sound acquisition device of a computing system according to the invention.

### Fig.1

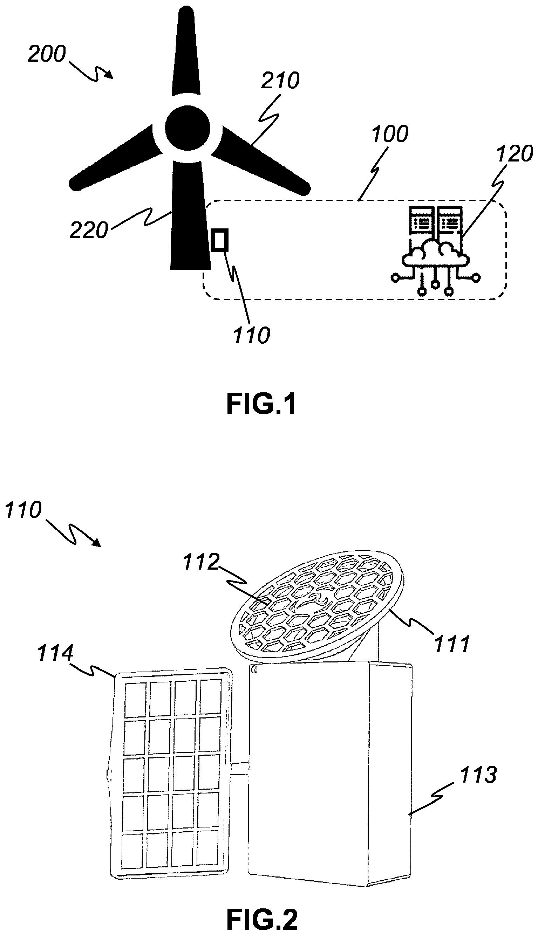

Figure 1 shows schematically a computing system 100 according to the invention for monitoring the blades 210 of a wind turbine 200. The computing system 100 comprises a sound acquisition device 110 fixed to an outer surface of a tower 220 of the wind turbine 200, and a remote computing device 120, for example a cloud computing device.

The sound acquisition device 110 comprises a microphone for acquisition of a sound sample of sound emitted by the blades 210 during operation of the wind turbine 200, a sound encoder for encoding the sound sample into a raw audio file, and a communication unit, for example a 4G module, for sending the raw audio file to the remote computing device 120.

### Fig.2

Figure 2 shows schematically the sound acquisition device 110 of a computing system 100 according to the invention.

The sound acquisition device 110 may comprise a housing 113 to protect the other components of the sound acquisition device, in particular the sound encoder, the communication unit, and the power source of the sound acquisition device 110. The housing 113 may carry a number of magnets for fixing the sound acquisition device 110 to the tower 220 of the wind turbine 200.

A, preferably parabolic, dish 111 is attached to the housing 113, wherein the dish 111 has an aperture covered by a grid 112. The aperture is oriented to the blades 210 of the wind turbine 200 when the sound acquisition device 110 is fixed to the tower 220 of the wind turbine 200.

The microphone of the sound acquisition device 110 is arranged within the dish 111, preferably at a focal point of the parabolic dish 111.

The sound acquisition device 110 may comprise a photovoltaic module 114 attached to the housing 113.

### Reference Signs List

| | | | |
|---|---|---|---|
| 100 | computing system | 114 | photovoltaic module |
| 110 | sound acquisition device | 120 | remote computing device |
| 111 | dish | 200 | wind turbine |
| 112 | grid | 210 | blade |
| 113 | housing | 220 | tower |

## Claims

1. Computer implemented method for monitoring the blades (210) of a wind turbine (200), the method comprising the following steps:
a. fixing a sound acquisition device (110) to an outer surface of a tower (220) of the wind turbine (200), wherein the sound acquisition device (110) comprises a microphone, a sound encoder and a communication unit,
b. acquiring a sound sample of sound emitted by the blades (210) during operation of the wind turbine (200) using the microphone of the sound acquisition device (110),
c. encoding the sound sample into a raw audio file using the sound encoder of the acquisition device,
d. sending the raw audio file to a remote computing device (120) using the communication unit of the sound acquisition device (110),
e. pre-processing the raw audio file by the remote computing device (120), wherein the pre-processing includes a compression of the audio file to reduce the amplitude of loud noise, and/or a normalization of the audio file to increase the loudness of the sound emitted by the blades (210), and/or a removal of stationary noise,
f. generating a spectrogram of the pre-processed audio file by the remote computing device (120),
g. detecting an anomaly by applying an image analysis machine learning model to the spectrogram by the remote computing device (120),
h. classifying the anomaly to a damage type by applying a damage type feature analysis machine learning model to frequency domain features of the audio file at the time and frequency of the anomaly by the remote computing device (120),
i. determining a damage location by applying a damage location feature analysis machine learning model to frequency domain features of the audio file at the time and frequency of the anomaly by the remote computing device (120), and
j. tracking of a damage severity by extracting audio features of the audio file at the time and frequency of the anomaly indicative of the damage severity depending on the damage type by the remote computing device (120).

2. Method according to claim 1, wherein
a. the image analysis machine learning model comprises supervised convolutional neural networks and/or unsupervised autoencoders, and/or
b. the method comprises training the image analysis machine learning model on general datasets and/or on datasets specific for the wind turbine (200).

3. Method according to claim 1 or 2,
wherein the method comprises combining predictions from two, three, or more image analysis machine learning models.

4. Method according to one of claims 1 to 3,
wherein the method comprises retraining the image analyses machine learning model periodically.

5. Method according to one of claims 1 to 4, wherein
a. the method comprises training the damage type feature analysis machine learning model on audio files obtained from sound samples of blades (210) having known damage types,
b. wherein classifying of the anomaly is done to one of the known damage types.

6. Method according to one of claims 1 to 5, wherein
a. the method comprises training the damage location feature analysis machine learning model on audio files obtained from sound samples of blades (210) having known damage locations, and/or
b. the step of determining the damage location comprises utilising geometric information of the blades (210) to estimate the damage location.

7. Method according to one of claims 1 to 6, wherein the step of tracking of the damage severity comprises
a. collecting baseline damage severity data during a healthy state of the blades (210),
b. logging historical damage severity data over time,
c. monitoring changes in damage severity over time,
d. trend analysis of damage severity data, and/or
e. estimating damage severity using an estimation machine learning model and/or statistical methods.

8. Method according to one of claims 1 to 7, the method comprising the following steps:
a. defining an alert threshold for the damage severity and
b. sending an alert when the damage severity exceeds the alert threshold by the remote computing device (120).

9. Method according to one of claims 1 to 8,
wherein the step of acquiring the sound sample takes place over a spectral range from 20 Hz to 20 kHz.

10. Method according to one of claims 1 to 9,
wherein the sound acquisition device (110) comprises a power source,
wherein the step of acquiring the sound sample is repeated with a repetition rate depending on a charging state of the power source.

11. Method according to one of claims 1 to 10,
wherein the step of fixing the sound acquisition device (110) to the outer surface of the tower (220) of the wind turbine (200) takes place at a side of the tower (220) facing the nominal wind direction.

12. Method according to one of claims 1 to 11,
a. wherein the sound acquisition device (110) comprises a photovoltaic module (114),
b. wherein the step of fixing the sound acquisition device (110) to the outer surface of the tower (220) of the wind turbine (200) takes place at a side of the tower (220) having a maximum solar exposition.

13. Method according to one of claims 1 to 12,
a. wherein the sound acquisition device (110) comprises a number of permanent magnets,
b. wherein the step of fixing the sound acquisition device (110) to the outer surface of the tower (220) of the wind turbine (200) comprises magnetic fixing using the number of permanent magnets.

14. Method according to one of claims 1 to 13,
a. wherein the sound acquisition device (110) comprises a dish (111),
b. wherein the microphone of the sound acquisition device (110) is positioned within the dish (111),
c. wherein the step of fixing the sound acquisition device (110) to the outer surface of the tower (220) of the wind turbine (200) comprises orienting an aperture of the dish (111) to the blades (210).

15. Computing system (100) implementing a method according to one of claims 1 to 14 for monitoring the blades (210) of a wind turbine (200), the computing system (100) comprising
a. a sound acquisition device (110) fixed to an outer surface of a tower (220) of the wind turbine (200), and
b. a remote computing device (120),
c. wherein the sound acquisition device (110) comprises
i. a microphone for acquisition of a sound sample of sound emitted by the blades (210) during operation of the wind turbine (200),
ii. a sound encoder for encoding the sound sample into a raw audio file, and
iii. a communication unit for sending the raw audio file to the remote computing device (120).
